# EUROPEAN PATENT APPLICATION

(11) **EP 1 469 124 A1**
(43) Date of publication of application: **20.10.2004**
(21) Application number: 04076000.1
(22) Date of filing: 30.03.2004
(51) Int. Cl.: D21H 21/30

(54) **Use of a composition for whitening recycled paper and board pulp**

(30) Priority: 17.04.2003 IT MI20030801
(71) Applicant: De Donato, Fausto, 20047 Brugherio (IT)
(72) Inventor: De Donato, Fausto, 20047 Brugherio (IT)
(74) Representative: Cattaneo, Elisabetta

(57) **Abstract**

The use of a composition comprising one or more optical whitening agents and a further compound selected from the group consisting of casein, casein derivatives and plant proteins and their mixtures for the whitening of recycled paper and board stock is described. Particularly, the use on paper from de-inked recycled stock is described.

## Description

This invention relates to the use of a composition comprising one or more optical whitening agents and a further compound selected from the group consisting of casein, casein derivatives and plant proteins and their mixtures for the whitening of recycled paper and board.

In the paper and board industry the term recycled stock is used to mean the recovered portion of paper and board. The use of recycled stock as a raw material in the manufacture of paper and board has increased considerably in recent years. As might be expected, this recovery has mainly been brought about by the low cost of the raw material in relation to that of cellulose, which constitutes the virgin raw material for the manufacture of paper and board, and secondarily by the increasing awareness of environmental problems associated with the excessive utilisation of forestry resources.

This type of raw material gives rise to operating problems which are much more severe than those with traditional cellulose, from an increase in microbiological contamination to an increase in the quantity of fines in the cycle, from the problem of de-inking to the problem of organic contaminants. In addition to this the lack of uniformity in the recycled stock makes it difficult to whiten recycled stock pulp to which optical whiteners cannot become fixed uniformly, and above all substantially.

In general, until a few years ago most recovered paper and board was used for the production of paper and board for packaging, but in recent years it has also been used for the manufacture of writing paper, papers for printing and coating.

An essential step in the use of recycled stock as a raw material in the manufacture of paper and board is undoubtedly the step of de-inking, which consists of removing the ink from the pulp. The main methods of de-inking are carried out by flotation, and recycled stock pulp known as "de-inked" is obtained.

A European list of standard grades of recovered paper and board is also known and comprises a detailed list subdivided into 5 groups: 1. ordinary grade, 2. medium grade, 3. high grade, 4. kraft grade, 5. special grade (EN 643 European List of Standard Grades of recovered Paper and Board, June 2002). In addition to these there is de-inked recycled stock, which is one of the recycled stocks indicated above or a mixture of these which has been subjected to the de-inking step.

Due to the growing interest in obtaining paper and board from recycled stock, efforts have been made to improve the pulp to obtain paper and board which is increasingly similar to that obtained using cellulose pulps. In this respect it has become essential to solve the problem of whitening the recycled stock pulp. Recycled stock pulp is in fact normally used as such, with the exception of the de-inked recycled stock pulps on which investigations into whitening have been carried out.

The use of sodium hypochlorite used alone or in combination with chlorine on de-inked pulp is known, but this has an appreciable impact on the environment, particularly in the discharge of wastes containing large quantities of organohalogen compounds.

In the case of de-inked pulp whitening processes with ozone or hydrogen peroxide and other chlorine-free reagents, which have resulted in the production of good quality pulp, are also known, in particular where the pulp is not of the mechanical type. With the technique using ozone percentage increases of 10 in degree of whiteness scores are obtained, but these are strongly dependent on the percentage of cellulose in the recycled stock and are therefore dependent on the grade of the recycled stock.

In order to solve the ecological problem associated with the felling of trees for the manufacture of paper of good quality and a good degree of whiteness, investigations have been carried out in parallel to whiten wood pulp, the other component of paper pulp together with cellulose. In this respect the use of a composition comprising an optical whitener and casein to whiten the virgin raw materials for the production of paper, that is wood pulp, has been described by the same applicant in document EP 1 047 729.

Unlike cellulose and wood pulp, whose structure is known and has been investigated, the combination of compounds present in a recycled stock pulp, such as for example colouring agents, oxidising agents, and bacteria, in addition to cellulose and wood pulp, has always caused paper and board manufacturers to use the pulp as such, or to subject it to de-inking processes and only then to whitening processes.

The object of this invention is therefore to provide a composition which is capable of whitening recycled stock pulp, as a source for the manufacture of paper, regardless of the grade of the recycled stock.

It is another object of the invention to provide use of a composition which is capable of whitening de-inked pulp, therefore reducing the environmental impact caused by felling.

Yet another object of the invention is to whiten recycled stock pulp without having an adverse effect on the visual and tactile properties of the finished product.

This invention achieves the abovementioned objects by providing use of a composition comprising at least one optical whitener and a compound selected from the group consisting of casein, casein derivatives and plant proteins and their mixtures as indicated in claim 1.

The advantageous features of use according to the invention are indicated in the dependent claims.

The invention will be better understood from the following detailed description with reference to embodiments and applications of the invention and the figures. The percentages provided are to be understood to be percentages by weight in relation to the dry weight of the pulp.

Figure 1 is a histogram of the ratio between thickness in mm and paper weight in g/m² for sheet paper obtained from pulp A and for sheet paper obtained from pulp A and treated with 2% of the composition.

Figure 2 is a histogram of the ratio between thickness in mm and paper weight in g/m² for sheet paper obtained from de-inked pulp and for sheet paper obtained from de-inked pulp treated with 2.5% of the composition.

By the term "recycled stock" is meant any recovered paper or board of any grade according to the European list of grades of recovered paper and board (EN 643 European List of Standard Grades of Recovered Paper and Board, June 2002).

By the term "recycled stock pulp" is meant the recovered paper and board subjected to the process of mechanical and/or chemical pulping form a pulp from which sheet paper or board is formed.

By the term "de-inked recycled stock pulp" or "de-inked stock" is meant the recycled stock pulp subjected to the process of de-inking by flotation.

By the term "finished product" is meant the sheet paper or board, or layers of the same.

Preferably the invention relates to use of the composition for the treatment of de-inked recycled stock.

High grade recycled stock is advantageously preferable for the manufacture of board.

The optical whitening agent, also known as an optical whitener, may be any optical whitener available commercially and a derivative of compounds selected from the group consisting of carbocyclic compounds, distyrylbenzenes, distyrylbiphenyls, divinylstilbenes, bistriazinylaminostilbenes, stilbenyl-2H-triazoles, stilbenyl-2H-naphtho[1,2-d]triazoles, bis(1,2,3-triazole-2-yl)stilbenes, benzoxazoles, stilbenylbenzoxazoles, bis(benzoxazoles), furans, benzo[b]furans, benzimidazoles, bis(benzo[b]furan-2-yl)biphenyls, cationic benzimidazoles, 1,3-diphenyl-2-pyrazoline, coumarin, naphthalimides, 1,3,5-triazin-2-yl derivatives and their mixtures. Preferably the said optical whitener is a compound deriving from the family of stilbenes and even more preferably a derivative of bistriazinylaminostilbene.

In addition to the optical whitening agent the composition used according to the invention also comprises a compound selected from the group consisting of casein, casein derivatives, plant proteins and their mixtures. Preferably the said compound is casein.

Casein derivatives are preferably caseinates of different alkali or alkaline earth metals, such as for example sodium caseinate.

The composition used for the invention may for example be prepared by dissolving the said compound selected from the group consisting of casein, casein derivatives and plant proteins or a mixture thereof in an alkaline solution in such a quantity as to place it completely in solution, then adding the optical whitener, which may be liquid or solid and then placed in solution, to the solution in a percentage volumetric proportion of the solution of the said compound with respect to the solution of optical whitening agent which lies in the range from 10%/90% v/v to 90/10% v/v. Preferably this ratio is 50/50% v/v. In the case of de-inked pulp the preferred percentage volumetric proportion between the solutions of the said compound and the optical whitener is within the range from 40/60% v/v to 60-40% v/v.

The composition is taken up into solution at a temperature between 15°C and 80 °C, preferably 40 °C, for approximately 10-30 minutes. Excipients such as for example preservatives, which are necessary for the preparation of a composition which can be placed on the market, or ingredients necessary for a preparation which is to be used immediately on the product may be added to this composition.

The process of whitening the recycled stock comprises the following steps:
1) subjecting the recycled stock to pulping in order to obtain a recycled stock pulp
2) adding a composition comprising one or more optical whiteners and a compound selected from the group consisting of casein, casein derivatives, plant proteins and their mixtures.

The composition is preferably added in an amount which is within the range from 0.5% to 10% with respect to the dry weight of recycled paper stock pulp.

Preferably before or after the step 2) one or more salts of a di- or trivalent metal are added in an amount such as to render the pH of the pulp/composition mixture being within the range from 4.5 to 7, preferably 5.

The said salt of a di- or trivalent metal is preferably selected from the group consisting of sulphate and polychloride. The metal in the said salt is preferably selected from the group consisting of aluminium, Fe(II), Fe(III), Cr(III). Preferably the said salt is aluminium sulphate.

Preferably the nature of the recycled stock is a pulp of de-inked recycled stock and in this case the de-inking step is carried out before the step of addition of the composition (step 2), and in the case of the addition of di- or trivalent salt before addition of the said salt.

In an alternative embodiment of the invention the two solutions, of casein and optical whitener respectively, may be added to the recycled stock pulp in sequence, in this case the composition forms directly on the recycled stock pulp. The amounts which have to be added are in this case calculated with respect to the dry weight of the recycled stock. For example a casein solution may be added as 2-10% with respect to the dry weight of the recycled stock and then the optical whitener in solution, or as such if liquid, may be added in a percentage equal to 0.5 - 10% with respect to the dry weight of the recycled stock.

Tests demonstrating the surprising advantages of the invention now follow.

The tests were carried out respectively on pulps obtained from:
Pulp A: high grade recycled stock
Pulp B: medium grade recycled stock
Pulp C: ordinary grade recycled stock
De-inked stock: recycled stock comprising a mixture of recycled stock of various grades and subjected to the process of de-inking by flotation.

An amount equal to 2% of the composition in relation to the recycled stock pulp in pulp A, pulp B and pulp C was then added, while 2.5% of the composition was added to the de-inked pulp.

250 g/m² sheets were obtained by static sheet forming without the addition of the composition and 6 sheets obtained from each type of pulp were tested for degree of whiteness using the reflection test according to method UNI 7623-86.

The results shown in the table were obtained.

| Type of pulp | UT value | Value after addition of 2% of the product | | | | |
|---|---|---|---|---|---|---|
| Pulp A | 79.2 | 90.7 | 90.9 | 90.6 | 90.5 | 90.7 |
| Pulp B | 68.5 | 79.0 | 79.5 | 79.7 | 79.2 | 79.1 |
| Pulp C | 61.2 | 70.5 | 69.5 | 67.5 | 69.9 | 70.0 |
| Type of pulp | UT value | Value after addition of 2.5% of the product | | | | |
| De-inked pulp | 73.5 | 86.6 | 89.7 | 90.0 | 90.6 | 90.6 |

As will be seen from the table, regardless of the nature of the composition of the recycled stock the whiteness score is always higher and, in the case of pulps A and B, increases by at least 10 points. In the case of the de-inked pulp the results are surprising as there is an increase of almost 20 points in the degree of whiteness.

The sheets obtained above and used for the evaluation had an improved appearance in comparison with the sheets as such (untreated (UT)), even to touch.

An important property of board is its thickness, which governs its stiffness. Sheets obtained from pulp A and from de-inked pulp were therefore evaluated and the ratio between the thickness and paper weight of the sheet, expressed in g/m², was evaluated.

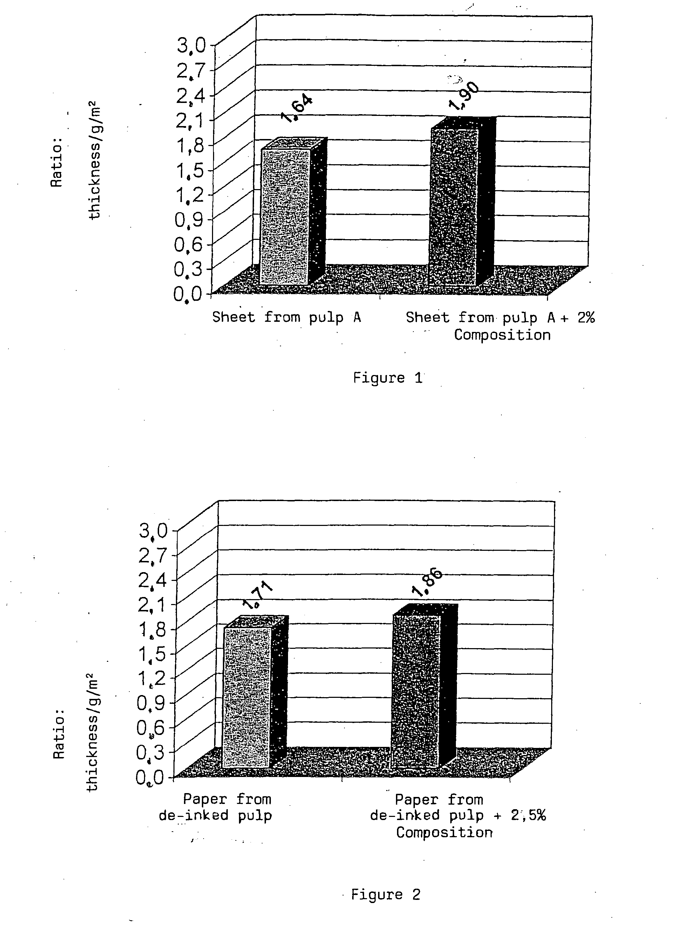

With reference to appended Figure 1, the histogram relating to untreated sheet is as high as 1.64, but the corresponding sheet treated with 2% of the composition has a ratio value of 1.90.

It will be seen from Figure 2 that the ratio for de-inked pulp as such is 1.71, while for that treated with 2.5% of the composition it is 1.89.

From the results shown in the figures it will be understood that, for the same paper weight, the use of the composition increased the thickness of the obtained sheet and therefore that of the final product, again demonstrating the excellent and multipurpose properties of the new use.

This invention has been described with reference to one embodiment, but variations or modifications may be made thereto, such as for example the type of recycled stock, without thereby going beyond the scope established by the appended claims.

## Claims

1. Use of a composition comprising one or more optical whiteners and a compound selected from the group consisting of casein, casein derivatives, plant proteins and their mixtures for the whitening of recycled paper and board stock.

2. Use according to claim 1 wherein the optical whitener may be any commercially available optical whitener and a derivative of compounds selected from the group consisting of carbocyclic compounds, distyrylbenzenes, distyrylbiphenyls, divinylstilbenes, bistriazinylaminostilbenes, stilbenyl-2H-triazoles, stilbenyl-2H-naphtho[1,2-d]triazoles, bis(1,2,3-triazole-2-yl)stilbenes, benzoxazoles, stilbenylbenzoxazoles, bis(benzoxazoles), furans, benzo[b]furans, benzimidazoles, bis(benzo[b]furan-2-yl)biphenyls, cationic benzimidazoles, 1,3-diphenyl-2-pyrazoline, coumarin, naphthalimides, 1,3,5-triazin-2-yl derivatives and their mixtures.

3. Use according to claim 2 wherein the optical whitener is a derivative of bistriazinylaminostilbene.

4. Use according to any one of the preceding claims wherein the said compound is casein.

5. Use according to any one of the preceding claims wherein the casein derivatives are caseinates of alkali metals or alkaline earth metals.

6. Use according to claim 5 wherein the casein derivative is sodium caseinate.

7. Use according to any one of the preceding claims wherein the recycled stock is de-inked recycled stock.

8. Process for whitening recycled stock pulp comprising the steps of:
1) subjecting the recycled stock to pulping in order to obtain the recycled stock pulp,
2) de-inking the pulp,
3) adding a composition comprising one or more optical whiteners and a compound selected from the group consisting of casein, casein derivatives and plant proteins or their mixture,
wherein the composition is preferably added in an amount being within the range from 0.5% to 10% with respect to the dry weight of the recycled stock pulp.

9. Process according to claim 8 in which before or after step 3) one or more salts of a di- or trivalent metal are added in an amount such as to render the pH of the pulp/composition mixture in the range from 4.5 to 7.

10. Finished paper or board product obtainable by the process of claim 8 or 9 with a whitener score lying within the range 85-91.

11. Finished paper or board product obtainable by the process of claim 8 or 9 with a thickness/paper weight (in g/m²) ratio of about 1.90.
